# EUROPEAN PATENT APPLICATION

(11) **EP 4 488 787 A1**
(43) Date of publication of application: **08.01.2025**
(21) Application number: 24182038.0
(22) Date of filing: 13.06.2024
(51) Int. Cl.: G05D 1/20

(54) **TRAVELING CONTROL METHOD, TRAVELING CONTROL PROGRAM, AND TRAVELING CONTROL SYSTEM**

(30) Priority: 06.07.2023 JP 2023111249
(71) Applicant: Yanmar Holdings Co., Ltd., Osaka-shi, Osaka (JP)
(72) Inventor: NISHIBEPPU, Shinya, Okayama-shi (JP); KURODA, Akifumi, Okayama-shi (JP); MURAYAMA, Masaaki, Okayama-shi (JP); ADACHI, Masahito, Okayama-shi (JP); NISHII, Yasuto, Okayama-shi (JP)
(74) Representative: Dennemeyer & Associates S.A.

(57) **Abstract**

[Problem] There is provided a traveling control method, a traveling control program, and a traveling control system that can ensure safety when a work vehicle automatically travels in a non-work area.

[Solution] An automatic traveling system 1 causes a work vehicle 10 to automatically travel in a work area in a case where the work vehicle 10 satisfies a traveling start condition, and causes the work vehicle 10 to automatically travel in a non-work area in a case where predetermined confirmation operation or confirmation action by a worker is performed.

## Description

### TECHNICAL FIELD

The present invention relates to a technology for controlling traveling of a work vehicle capable of automatically traveling.

### BACKGROUND ART

Conventionally, there is known a technology for causing a work vehicle to automatically travel in a work area in accordance with a predetermined target route. Furthermore, there is also known a technique for causing a work vehicle to automatically travel outside a work area (in a non-work area) in accordance with a target route (for example, see Patent Document 1).

### PRIOR ART DOCUMENT

### PATENT DOCUMENT

Patent Document 1: Japanese Patent Application Laid-open No. 2021-015341

### SUMMARY OF INVENTION

### TECHNICAL PROBLEM

However, in a non-work area, a risk of contacting an obstacle is increased compared to, for example, a case of automatic traveling inside a work area, and therefore it is not appropriate to permit automatic traveling without any condition.
On the other hand, when a configuration in which automatic traveling in a non-work area is prohibited and only manual traveling by a worker is permitted, work efficiency is decreased.

An objection of the present invention is to provide a traveling control method, a traveling control program, and a traveling control system that can ensure safety when a work vehicle automatically travels in a non-work area.

### SOLUTION TO PROBLEM

A traveling control method according to the present invention is a traveling control method for controlling traveling of a work vehicle capable of automatically traveling, the traveling control method comprising execution of: causing the work vehicle to automatically travel in a work area in a case where the work vehicle satisfies a traveling start condition; and causing the work vehicle to automatically travel in a non-work area in a case where predetermined confirmation operation or confirmation action by a worker is performed.

A traveling control program according to the present invention is a traveling control program that controls traveling of a work vehicle capable of automatically traveling, the traveling control program for causing one or more processors to execute: causing the work vehicle to automatically travel in a work area in a case where the work vehicle satisfies a traveling start condition; and causing the work vehicle to automatically travel in a non-work area in a case where predetermined confirmation operation or confirmation action by a worker is performed.

A traveling control system according to the present invention is a traveling control system that controls traveling of a work vehicle capable of automatically traveling. The traveling control system causes the work vehicle to automatically travel in a work area in a case where the work vehicle satisfies a traveling start condition; and causes the work vehicle to automatically travel in a non-work area in a case where predetermined confirmation operation or confirmation action by a worker is performed.

### ADVANTAGEOUS EFFECTS OF INVENTION

According to the present invention, it is possible to provide a traveling control method, a traveling control program, and a traveling control system that can ensure safety when a work vehicle automatically travels in a non-work area.

### BRIEF DESCRIPTION OF DRAWINGS

FIG. 1 is a block diagram illustrating a configuration of an automatic traveling system according to an embodiment of the present invention.
FIG. 2 is an external view illustrating an example of a work vehicle according to the embodiment of the present invention.
FIG. 3 is a diagram illustrating an example of an inter-field route for the work vehicle according to the embodiment of the present invention.
FIG. 4 is a diagram illustrating an example of a target route for the work vehicle according to the embodiment of the present invention.
FIG. 5 is a diagram illustrating an example of a menu screen displayed on an operation terminal according to the embodiment of the present invention.
FIG. 6A is a diagram illustrating an example of a teaching operation screen displayed on the operation terminal according to the embodiment of the present invention.
FIG. 6B is a diagram illustrating an example of the teaching operation screen displayed on the operation terminal according to the embodiment of the present invention.
FIG. 7 is a diagram illustrating an example of a traveling screen displayed on the operation terminal according to the embodiment of the present invention.
FIG. 8 is a diagram illustrating an example of a traveling method of the work vehicle in a field according to the embodiment of the present invention.
FIG. 9 is a diagram illustrating an example of the traveling screen displayed on the operation terminal according to the embodiment of the present invention.
FIG. 10A is a diagram illustrating an example of the traveling screen displayed on the operation terminal according to the embodiment of the present invention.
FIG. 10B is a diagram illustrating an example of the traveling screen displayed on the operation terminal according to the embodiment of the present invention.
FIG. 11 is a diagram illustrating an example of a traveling method of the work vehicle on a road according to the embodiment of the present invention.
FIG. 12 is a flowchart illustrating an example of an automatic traveling processing procedure executed by the automatic traveling system according to the embodiment of the present invention.
FIG. 13 is a diagram illustrating an example of an automatic traveling permission area according to the embodiment of the present invention.

### DESCRIPTION OF EMBODIMENTS

The following embodiments are examples embodying the present invention, and does not limit a technical scope of the present invention.

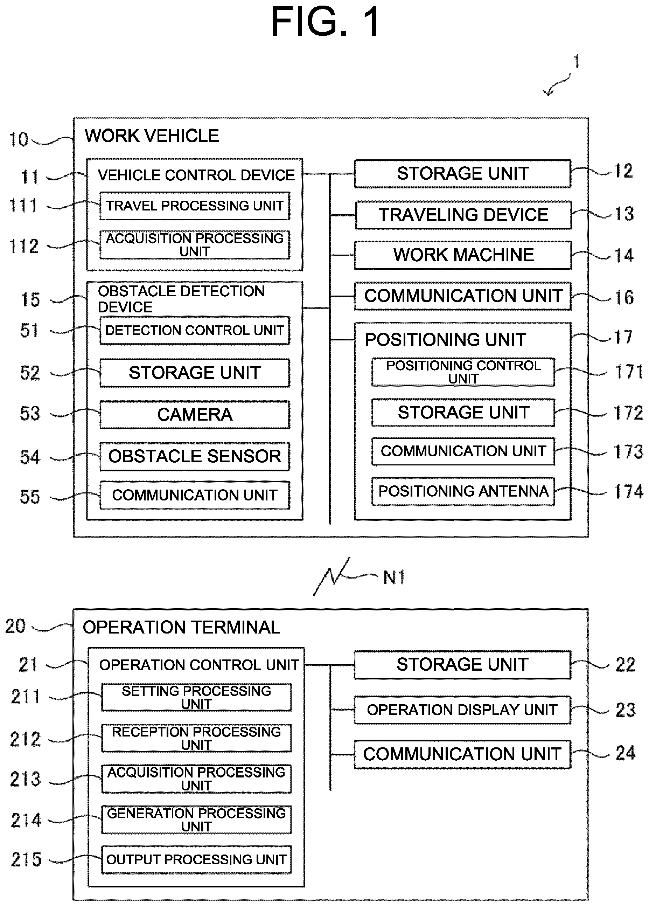

As illustrated in FIG. 1, an automatic traveling system 1 according to an embodiment of the present invention includes a work vehicle 10 and an operation terminal 20. The work vehicle 10 and the operation terminal 20 can communicate with each other via a communication network N1. For example, the work vehicle 10 and the operation terminal 20 can communicate with each other via a portable telephone line network, a packet line network, or a wireless LAN.

In this embodiment, an example, in which the work vehicle 10 is a tractor, will be described. In another embodiment, the work vehicle 10 may be a combine, a rice transplanter, a construction machine, a snowplow, or the like. The work vehicle 10 has a configuration that enables automatic traveling (autonomous traveling) within a work area of a field in accordance with a preset target route. In addition, the work vehicle 10 can perform predetermined work while automatically traveling within the work area. Furthermore, the work vehicle 10 is configured to be able to automatically travel on a road connecting a plurality of fields (connection path) in accordance with a preset inter-field route. The work vehicle 10 is capable of automatically traveling in accordance with the preset target route and the preset inter-field route inside the field and outside the field (road) on the basis of position information of a current position of the work vehicle 10, which is calculated by a positioning unit 17. The work vehicle 10 may automatically travel with a worker on board.

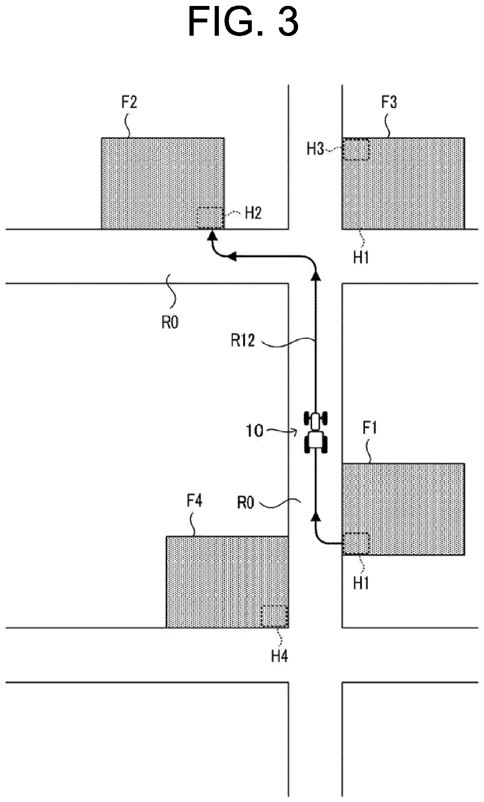

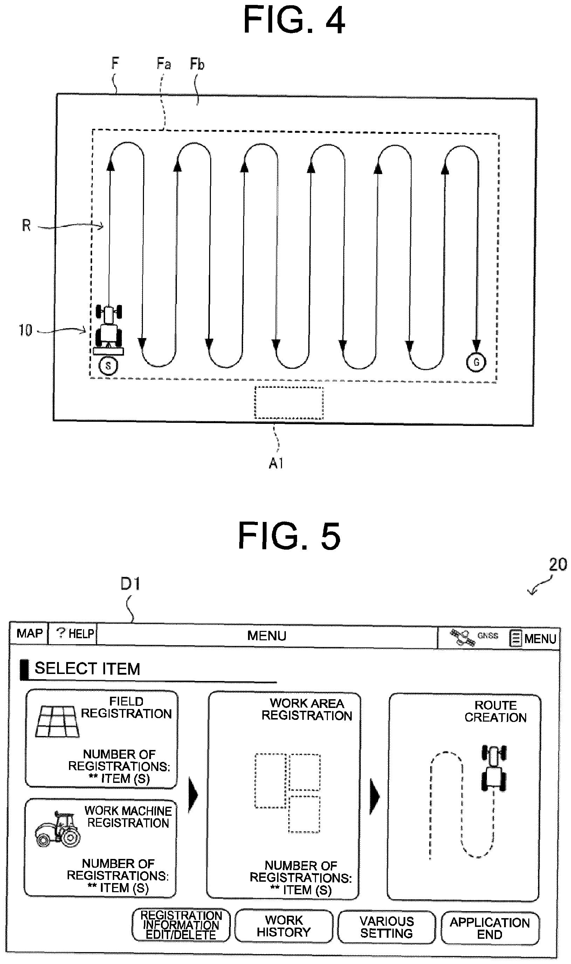

FIG. 3 illustrates a traveling example of the work vehicle 10 which travels on a road R0 between fields, and FIG. 4 illustrates a traveling example of the work vehicle 10 which travels within a field F. The field F in FIG. 4 illustrates an example of fields illustrated in FIG. 3. For the field F, a work area Fa in which automatic traveling of the work vehicle 10 is permitted, a non-work area Fb in which automatic traveling of the work vehicle 10 is restricted, or a non-work area Fb in which setting of a target route (including a straight route and a turning route) for work is restricted is set. For example, in order to prevent the work vehicle 10 from jumping out of the field when automatically traveling within the field, a margin area of several meters from an edge (boundary) of the field is secured, and this margin area is set to the non-work area Fb. The work area Fa is set to an area excluding the non-work area Fb in the field F. When a target route R is set in the work area Fa, the work vehicle 10 can automatically travel within the work area Fa in accordance with the target route R. The work vehicle 10 performs predetermined work while automatically traveling from a traveling start position S to a traveling end position G within the work area Fa in accordance with the target route R. In the non-work area Fb, automatic traveling is restricted, and a worker boards the work vehicle 10 and manually drives the work vehicle 10 by manual steering.

In addition, a work space A1 where predetermined work (specific work) is performed is set in the field F. For example, in the work space A1, fuel replenishment work and discharging work for objects to be worked (such as reaped materials and harvested materials) are performed. When the work vehicle 10 needs the specific work during automatic traveling, the work in the work area Fa is interrupted and the work vehicle 10 moves to the work space A1. When the work vehicle 10 finishes the specific work in the work space A1, the work vehicle 10 returns to the work area Fa and resumes work.

When the work vehicle 10 finishes working in one field F, the work vehicle 10 can move to another field F to perform work. For example, as illustrated in FIG. 3, after the work vehicle 10 finishes working in a field F1, the work vehicle 10 automatically travels on an inter-field route R12 (teaching route) preset on a road R0 and moves to a field F2. For example, the work vehicle 10 automatically travels on the inter-field route R12 that connects an entrance H1 of the field F1 and the entrance H2 of the field F2. When the work vehicle 10 arrives at the field F2, the work vehicle 10 performs predetermined work in the work area Fa of the field F2 while automatically traveling in accordance with the preset target route R.

The target route R in the field F is set appropriately in accordance with a work content. In addition, the inter-field route R12 of the road R0 is preset in accordance with operation (teaching operation) by a worker (operator). In this embodiment, an example of the inter-field route R12 on the road R0 on which the work vehicle 10 moves from the field F1 to the field F2 is taken. However, the inter-field route R12 may be a route on the road R0 on which the work vehicle 10 moves from the field F2 to the field F1. Additionally, in a case where the work vehicle 10 moves through three or more fields in sequence, the inter-field route may be set between each two fields. The route set for the road R0 is not a route for moving from a field to a field (an inter-field route), but may be simply a route for moving from a first point to a second point on the road R0 (inter-point route). Further, the first point and the second point may be positions specified on the map by the worker.

The inter-field route may be a road exclusively for work vehicles, such as a farm road, a forest road, a public road, a private road, and a motorway, or may be a road that can be passed by general vehicles (such as passenger cars).

In a case where the work vehicle 10 travels in a non-work area (such as the non-work area Fb and the road R0) outside the work area Fa, when automatic traveling is permitted without any condition, a risk of contacting an obstacle is increased. Therefore, it is not appropriate to permit automatic traveling with no condition in the non-work area. On the other hand, a configuration in which automatic traveling in the non-work area is prohibited and only manual traveling by a worker is permitted causes a problem that work efficiency decreases. In contrast, the automatic traveling system 1 according to this embodiment has a configuration that can ensure safety when the work vehicle 10 automatically travels in the non-work area, as described below.

### [Work Vehicle 10]

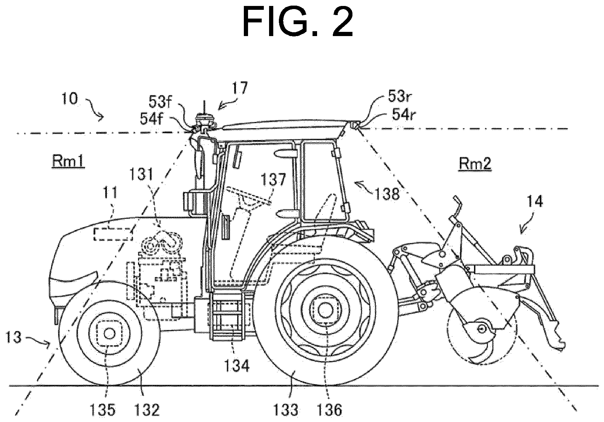

As illustrated in FIG. 1 and FIG. 2, the work vehicle 10 includes a vehicle control device 11, a storage unit 12, a traveling device 13, a work machine 14, an obstacle detection device 15, a communication unit 16, the positioning unit 17, and the like. The vehicle control device 11 is electrically connected to the storage unit 12, the traveling device 13, the work machine 14, the obstacle detection device 15, the positioning unit 17, and the like. The vehicle control device 11 and the obstacle detection device 15 may be communicable wirelessly, and the vehicle control device 11 and the positioning unit 17 may be communicable wirelessly.

The communication unit 16 is a communication interface that connects the work vehicle 10 to the communication network N1 by wire or wirelessly and executes data communication according to a predetermined communication protocol with an external device (such as the operation terminal 20).

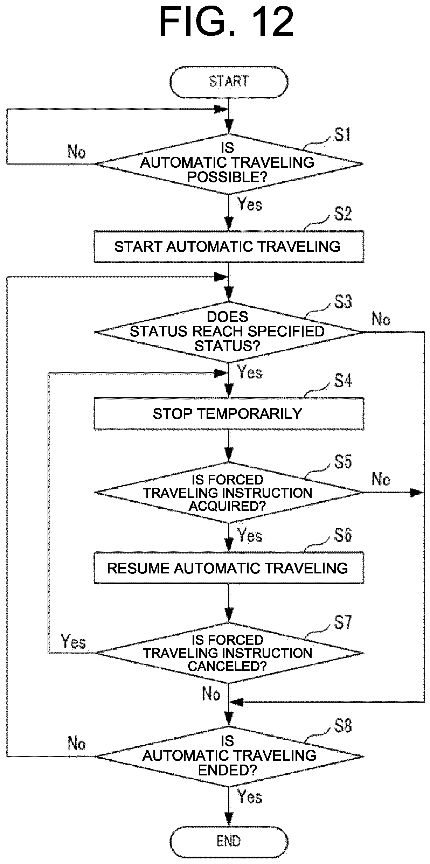

The storage unit 12 is a non-volatile storage unit such as a hard disk drive (HDD) and a solid state drive (SSD) that stores various types of information. The storage unit 12 stores a control program such as an automatic traveling program for causing the vehicle control device 11 to execute an automatic traveling process described below (see FIG. 12). For example, the automatic traveling program is non-temporarily recorded in a computer-readable recording medium such as a CD and a DVD, and is read by a predetermined reading device (not illustrated) to be stored in the storage unit 12. The automatic traveling program may be downloaded from a server (not illustrated) to the work vehicle 10 via the communication network N1 to be stored in the storage unit 12. In addition, the storage unit 12 stores data of the target route R and the like generated in the operation terminal 20.

The traveling device 13 is a driving unit that causes the work vehicle 10 to travel. As illustrated in FIG. 2, the traveling device 13 includes an engine 131, front wheels 132, rear wheels 133, a transmission 134, a front axle 135, a rear axle 136, a steering wheel 137, and the like. The front wheels 132 and the rear wheels 133 are provided on both the left and right sides of the work vehicle 10. In addition, the traveling device 13 is not limited to a wheel type having the front wheels 132 and the rear wheels 133 and may be a crawler type having crawlers provided on the left and right sides of the work vehicle 10.

The engine 131 is a driving source such as a diesel engine and a gasoline engine that are driven using fuel supplied in a fuel tank (not illustrated). The traveling device 13 may include an electric motor as a driving source together with or instead of the engine 131. A generator (not illustrated) is connected to the engine 131, and electric power is supplied from the generator to electric components such as the vehicle control device 11, the obstacle detection device 15, and the positioning unit 17 that are provided in the work vehicle 10, a battery and the like. The battery is charged by the electric power supplied from the generator. The electric components such as the vehicle control device 11, the obstacle detection device 15, and the positioning unit 17 provided in the work vehicle 10 can be driven by electric power supplied from the battery after the engine 131 stops.

Driving force of the engine 131 is transmitted to the front wheels 132 via the transmission 134 and the front axle 135 and is transmitted to the rear wheels 133 via the transmission 134 and the rear axle 136. Further, the driving force of the engine 131 is also transmitted to the work machine 14 via a PTO shaft (not illustrated). In a case where the work vehicle 10 performs automatic traveling, the traveling device 13 performs traveling action in accordance with a command from the vehicle control device 11. Further, the traveling device 13 decelerates or stops the work vehicle 10 in accordance with a command from the vehicle control device 11.

Examples of the work machine 14 include a mower, a cultivator, a plow, a fertilizer, a sprayer (chemical spreading machine), a plowing machine and a sowing machine, and the work machine 14 is detachable to/from the work vehicle 10. Consequently, the work vehicle 10 can perform various types of works by using the respective work machines 14. FIG. 2 illustrates a case where the work machine 14 is a tiller. For example, the work machine 14 is mounted on the rear of the work vehicle 10. The work vehicle 10 is mounted with the work machine 14 on the rear thereof, and performs plowing work by traveling within the field F.

The steering wheel 137 is an operation unit operated by a worker or the vehicle control device 11. For example, in the traveling device 13, the angle of the front wheels 132 is changed by a hydraulic power steering mechanism (not illustrated) or the like in accordance with the operation of the steering wheel 137 by the vehicle control device 11, so that the traveling direction of the work vehicle 10 is changed.

In addition, the traveling device 13 includes a shift lever, an accelerator, a brake, and the like (not illustrated) operated by the vehicle control device 11, in addition to the steering wheel 137. In the traveling device 13, a gear of the transmission 134 is switched to a forward gear, a reverse gear, or the like in accordance with the operation of the shift lever by the vehicle control device 11, and a traveling mode of the work vehicle 10 is switched to a forward mode, a reverse mode, or the like. The vehicle control device 11 controls the rotation speed of the engine 131 by operating the accelerator. Further, the vehicle control device 11 operates the brakes to stop the rotation of the front wheels 132 and the rear wheels 133 using an electromagnetic brake.

The positioning unit 17 is a communication device including a positioning control unit 171, a storage unit 172, a communication unit 173, a positioning antenna 174, and the like. For example, as illustrated in FIG. 2, the positioning unit 17 is provided at an upper part of a cabin 138 in which an operator rides. Further, an installation location of the positioning unit 17 is not limited to the cabin 138. Moreover, the positioning control unit 171, the storage unit 172, the communication unit 173, and the positioning antenna 174 of the positioning unit 17 may be separately disposed at different positions in the work vehicle 10. As described above, the battery is connected to the positioning unit 17, so that the positioning unit 17 can operate when the engine 131 is stopped. In addition, as the positioning unit 17, for example, a mobile phone terminal, a smart phone, a tablet terminal, a quantum compass, or the like may be used an alternative.

The positioning control unit 171 is a computer system that includes one or more processors and storage memories such as a non-volatile memory and a RAM. The storage unit 172 is a non-volatile memory or the like that stores a program for causing the positioning control unit 171 to execute a positioning process, and data such as positioning information and movement information. For example, the program is non-temporarily recorded in a computer-readable recording medium such as a CD and a DVD, read by a predetermined reading device (not illustrated), and stored in the storage unit 172. The program may be downloaded from a server (not illustrated) to the positioning unit 17 via the communication network N1 and stored in the storage unit 172.

The communication unit 173 is a communication interface that connects the positioning unit 17 to the communication network N1 by wire or wirelessly and executes data communication according to a predetermined communication protocol with an external device such as a base station server via the communication network N1.

The positioning antenna 174 is an antenna that receives a radio wave (GNSS signal) transmitted from a satellite.

The positioning control unit 171 calculates a current position of the work vehicle 10 on the basis of the GNSS signal that is received from the satellite by the positioning antenna 174. For example, in the case where the work vehicle 10 travels automatically in the field F, when the positioning antenna 174 receives radio waves (emission time, locus information, and the like) emitted from each of a plurality of satellites, the positioning control unit 171 calculates a distance between the positioning antenna 174 and each of the satellites and calculates a current position (a latitude and a longitude) of the work vehicle 10 on the basis of the calculated distance. Alternatively, the positioning control unit 171 may perform positioning by a real-time kinematic positioning method (an RTK-GPS positioning method (an RTK method)) for calculating a current position of the work vehicle 10 by using correction information that corresponds to a base station (reference station) near the work vehicle 10. Thus, the work vehicle 10 automatically travels using the positioning information by the RTK method. The current position of the work vehicle 10 may be the same as a positioning position (for example, a position of the positioning antenna 174), or may be a position shifted from the positioning position.

When the work vehicle 10 detects an object to be detected during automatic traveling, the obstacle detection device 15 outputs detection information (measurement information) to the vehicle control device 11. Specifically, the obstacle detection device 15 includes a detection control unit 51, a storage unit 52, a camera 53, an obstacle sensor 54, a communication unit 55, and the like. The obstacle detection device 15 may be configured as one unit and mounted on the work vehicle 10, or a plurality of components may be distributed and arranged on the work vehicle 10.

The communication unit 55 is a communication interface that connects the obstacle detection device 15 to the communication network N1 by wire or wirelessly and executes data communication according to a predetermined communication protocol with an external device (such as the operation terminal 20) via the communication network N1.

The storage unit 52 is a non-volatile storage unit such as an HDD and an SSD that stores various types of information. The storage unit 52 stores a control program such as an obstacle detection program for causing the obstacle detection device 15 to perform an obstacle detection process. For example, the obstacle detection program is non-temporarily recorded in a computer-readable recording medium such as a CD and a DVD, read by a predetermined reading device (not illustrated), and stored in the storage unit 52. The obstacle detection program may be downloaded from a server (not illustrated) to the obstacle detection device 15 via the communication network N1 and stored in the storage unit 52.

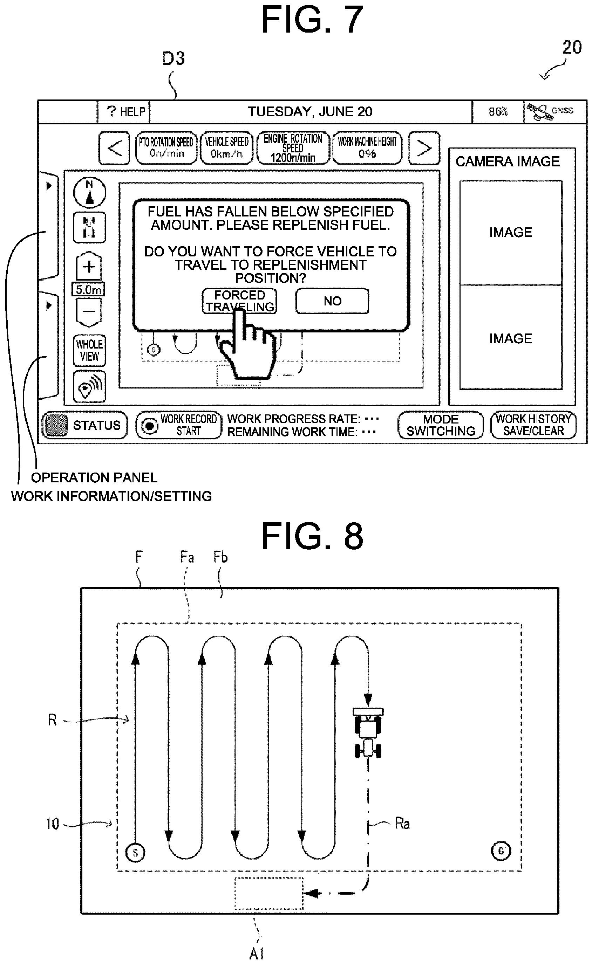

The camera 53 is a digital camera that captures an image of an object included in a predetermined imaging range and outputs the image as digital image data. The camera 53 continuously images the object at a predetermined frame rate, generates frame images (photographed images) with predetermined resolution, and sequentially transmits the frame images to the detection control unit 51. Furthermore, the camera 53 transmits image data of the captured image to the operation terminal 20 via the communication unit 55. The operation terminal 20 can display the photographed image on an operation screen of an operation display unit 23 (see FIG. 7 and the like).

Furthermore, the camera 53 includes a front camera 53f that can image an imaging range in front of the work vehicle 10, and a rear camera 53r that can image an imaging range behind the work vehicle 10. As illustrated in FIG. 2, the front camera 53f is disposed on the upper front side of the cabin 138, and the rear camera 53r is disposed on the upper rear side of the cabin 138. The camera 53 may include left and right cameras capable of imaging the imaging ranges on the left side and the right side when viewed from the work vehicle 10, respectively. That is, the camera 53 may be configured to be able to photograph images in all directions around the work vehicle 10.

The obstacle sensor 54 is a sensor that detects an object to be detected in a predetermined detection range by using infrared, ultrasonic, or other means. For example, the obstacle sensor 54 may be a rider sensor (distance sensor) that can three-dimensionally measure a distance to an object to be detected using a laser or may be a sonar sensor with a plurality of sonars that can measure a distance to an object to be detected using ultrasonic waves. The obstacle sensor 54 is installed at a central front part, a central rear part, a right side part, a left side part, or the like of a body of the work vehicle 10, and monitors the surroundings of the work vehicle 10 to detect an obstacle. In this embodiment, a case where the obstacle sensor 54 includes the front obstacle sensor 54f that can detect an object to be detected in a detection range in front of the work vehicle 10, and the rear obstacle sensor 54r that can detect an object to be detected in a detection range behind the work vehicle 10 will be described as an example. As illustrated in FIG. 2, the front obstacle sensor 54f is disposed on the upper front side of the cabin 138, and the rear obstacle sensor 54r is disposed on the upper rear side of the cabin 138. The front camera 53f and the front obstacle sensor 54f may be configured as one unit, and the rear camera 53r and the rear obstacle sensor 54r may be configured as one unit.

The obstacle sensor 54 uses, for example, a laser (such as near-infrared laser light) to measure a distance to each ranging point (object to be measured) existing in a measurement range, and generates a distance image on the basis of the measurement information. The obstacle sensor 54 includes an electronic control unit that integrates a microcontroller and the like, and a processing unit constructed from various control programs and the like, and is connected to the detection control unit 51, the vehicle control device 11, and the like via a CAN to enable mutual communication.

As illustrated in FIG. 2, in the front obstacle sensor 54f, a first measurement range Rm1 in front of the cabin 138 is set to the measurement range, and in the rear obstacle sensor 54r, a second measurement range Rm2 behind the cabin 138 is set to the measurement range.

The front obstacle sensor 54f and the rear obstacle sensor 54r are disposed on a left-right center line of the work vehicle 10, like the front camera 53f and the rear camera 53r. The front obstacle sensor 54f is disposed at the center of the upper left and right sides of a front end of the cabin 138 in a forward leaning posture looking down the front side of the work vehicle 10 diagonally from above. Consequently, in the front obstacle sensor 54f, a predetermined range on the front side of the vehicle body with the left-right center line of the work vehicle 10 as the axis of symmetry is set to the first measurement range Rm1. The rear obstacle sensor 54r is disposed at the center of the upper left and right sides of a rear end of the cabin 138 in a backward-leaning posture looking down the rear side of the work vehicle 10 diagonally from above. Consequently, in the rear obstacle sensor 54r, a predetermined range on the rear side of the vehicle body with the left-right center line of the work vehicle 10 as the axis of symmetry is set to the second measurement range Rm2.

The obstacle sensor 54 uses a Time Of Flight (TOF) method for measuring the distance to the ranging point on the basis of round trip time for an irradiated laser to reach the ranging point and return, and measures a distance from the obstacle sensor 54 to the ranging point in the measurement range. The obstacle sensor 54 performs three-dimensional measurement in the measurement range by vertically and horizontally scanning over the entire measurement range at high speed with the laser and sequentially measuring the distance to the ranging point for each scanning angle (coordinates). The obstacle sensor 54 sequentially measures the intensity of reflected light (reflection intensity) from each ranging point obtained when the entire measurement range is scanned vertically and horizontally at high speed with the laser. The obstacle sensor 54 repeatedly measures the distance to each ranging point in the measurement range, each reflection intensity, and the like in real time.

The obstacle sensor 54 generates a distance image from the measurement information such as the measured distance to each ranging point and the scanning angle (coordinates) for each ranging point, extracts a ranging point group that is estimated to be an obstacle, and transmits measurement information regarding the extracted ranging point group to the detection control unit 51 as measurement information regarding the obstacle.

Furthermore, in the measurement range (detection range) of the obstacle sensor 54, a control range according to a distance from the work vehicle 10 is set. For example, in the measurement range, a range of a distance L1 from the work vehicle 10 is set to a stop control range, a range from the distance L1 to a distance L2 is set to a deceleration control range, and a range from the distance L2 to a distance L3 is set to a notification control range (L1 < L2 < L3). Each control range can be set in accordance with a type, a model, a work content, a vehicle speed, and the like of the work vehicle 10.

The detection control unit 51 outputs the measurement information acquired from the obstacle sensor 54 to the vehicle control device 11. The detection control unit 51 sequentially outputs the measurement information to the vehicle control device 11 every time the detection control unit 51 acquires the measurement information from the obstacle sensor 54 while the work vehicle 10 is automatically traveling. In other embodiment, the detection control unit 51 may determine the type of an object to be detected (object to be measured) (such as a person and a vehicle) on the basis of the captured image acquired from the camera 53 and the measurement information acquired from the obstacle sensor 54, and may output a measurement result to the vehicle control device 11.

The vehicle control device 11 has a control device such as a CPU, a ROM, and a RAM. The CPU is a processor that executes various arithmetic processes. The ROM is a non-volatile storage unit in which a control program such as a BIOS and an OS for causing the CPU to execute the various arithmetic processes are previously stored. The RAM is a volatile or non-volatile storage unit that stores various types of information and is used as a temporary storage memory for the various processes executed by the CPU. The vehicle control device 11 controls the work vehicle 10 by causing the CPU to execute the various control programs previously stored in the ROM or the storage unit 12.

Specifically, as illustrated in FIG. 1, the vehicle control device 11 includes various types of processing units such as a travel processing unit 111 and an acquisition processing unit 112. The vehicle control device 11 functions as the various processing units by causing the CPU to execute the various processes according to the automatic traveling program. Further, some or all of the processing units may be configured by an electronic circuit. The automatic traveling program may be a program for causing a plurality of processors to function as the processing units. Further, the automatic traveling program includes a traveling control program of the present invention.

The travel processing unit 111 controls traveling of the work vehicle 10. For example, in a case where a travel mode of the work vehicle 10 is automatic traveling (automatic travel mode), the travel processing unit 111 causes the work vehicle 10 to travel automatically on the basis of the position information (positioning information) indicating a current position of the work vehicle 10 determined by the positioning unit 17. For example, when the work vehicle 10 satisfies an automatic travel start condition and acquires a travel start instruction from the worker, the travel processing unit 111 causes the work vehicle 10 to start automatic travel on the basis of the positioning information. For example, the travel processing unit 111 causes the work vehicle 10 to automatically travel from the traveling start position S to the traveling end position G in accordance with the target route R (see FIG. 4) generated and set in advance in the operation terminal 20.

In a case where the travel mode of the work vehicle 10 is a manual travel mode, it is possible to cause the work vehicle 10 to manually travel on the basis of worker's operation (manual steering). For example, the travel processing unit 111 acquires operation information corresponding to driving operation such as steering wheel operation, gear change operation, traveling direction switching operation, and brake operation by a worker, and causes the traveling device 13 to perform traveling action on the basis of the operation information.

Further, the travel processing unit 111 causes the work vehicle 10 to perform a predetermined countermeasure process in a case where the work vehicle 10 detects an obstacle during automatic traveling. Specifically, the travel processing unit 111 causes the work vehicle 10 to issue a warning sound in a case where an obstacle is detected in the notification control range. In addition, the travel processing unit 111 decelerates the automatically traveling work vehicle 10 from a preset vehicle speed in a case where an obstacle is detected in the deceleration control range. In addition, the travel processing unit 111 temporarily stops the automatically traveling work vehicle 10 in a case where an obstacle is detected in the stop control range. The travel processing unit 111 may cause the work vehicle 10 to execute a countermeasure process according to the type of an object detected by the obstacle detection device 15.

Herein, in a case where the work vehicle 10 travels in a non-work area outside the work area Fa (non-work area Fb (see FIG. 4) and the inter-field route R12 (see FIG. 3) or the like), and a predetermined condition is satisfied, the travel processing unit 111 permits automatic traveling. The predetermined condition is, for example, a state in which the worker is able to confirm (or monitor) that the work vehicle 10 travels in the non-work area. Specifically, the travel processing unit 111 permits the work vehicle 10 to automatically travel in the non-work area on the condition that predetermined confirmation operation or confirmation action by the worker is performed. The travel processing unit 111 prohibits the work vehicle 10 from automatically traveling in the non-work area in a case where the predetermined confirmation operation or confirmation action by the worker is not performed. When the travel processing unit 111 permits the work vehicle 10 to travel automatically in response to the predetermined confirmation operation or confirmation action by the worker, the travel processing unit 111 causes the work vehicle 10 to travel automatically without depending on the worker's steering operation.

The acquisition processing unit 112 acquires information on the predetermined confirmation operation or confirmation action by the worker. For example, in a case where the worker presses an operation button (forced travel button) on a traveling screen D3 (see FIG. 7) of the operation terminal 20, the acquisition processing unit 112 acquires, from the operation terminal 20, operation information indicating that the operation button is pressed. When the acquisition processing unit 112 acquires the operation information, the travel processing unit 111 permits the work vehicle 10 to automatically travel in the non-work area. The confirmation operation may be user operation on an operation device (for example, a remote control) different from the operation terminal 20.

For example, the acquisition processing unit 112 acquires a captured image from a camera (not illustrated) installed in the operation terminal 20, and determines whether or not a line of sight of the worker appearing on the captured image is directed to a camera image (image of surrounding of the work vehicle 10) (see FIG. 7) displayed on the operation terminal 20. In a case where the acquisition processing unit 112 determines that the line of sight of the worker is directed to the camera image, the travel processing unit 111 permits the work vehicle 10 to automatically travel in the non-work area.

Thus, in a case where the travel processing unit 111 determines that the worker is in a state in which the worker can monitor the work vehicle 10 from information such as the worker's operation, movement, and posture acquired by the acquisition processing unit 112, the travel processing unit 111 permits the work vehicle 10 to automatically travel in the non-work area. A specific traveling example of automatic traveling in the non-work area will be discussed later.

### [Operation Terminal 20]

As illustrated in FIG. 1, the operation terminal 20 is an information processing device that includes an operation control unit 21, a storage unit 22, the operation display unit 23, a communication unit 24, and the like. The operation terminal 20 may be composed of a portable terminal such as a tablet terminal and a smartphone.

The communication unit 24 is a communication interface that connects the operation terminal 20 to the communication network N1 by wire or wirelessly and executes data communication according to a predetermined communication protocol with one or more external devices such as the work vehicles 10 via the communication network N1.

The operation display unit 23 is a user interface that includes a display unit such as a liquid crystal display and an organic EL display that displays various types of information, and an operation unit such as a touch panel, a mouse, and a keyboard that receives operation. On an operation screen displayed on the display unit, the worker can operate the operation unit to register various types of information (such as work vehicle information, field information, and work information which will be later-described). Further, the worker can operate the operation unit to provide a work starting instruction, a travel stop instruction, and the like to the work vehicle 10. In addition, at a location away from the work vehicle 10, the worker can comprehend a travel status of the work vehicle 10, which travels on the field F and the road R0, from a travel trajectory and the captured image of the camera 53 displayed on the operation terminal 20 (see FIG. 7 and the like). Furthermore, the worker can comprehend a detection result of an obstacle displayed on the operation terminal 20, an execution status of the countermeasure processes, and the like.

In addition, the worker performs operation (teaching operation) of setting the inter-field route R12 for causing the work vehicle 10 to automatically travel on the road R0 (connection path) connecting the field F1 and the field F2, on the operation unit.

The storage unit 22 is a non-volatile storage unit such as an HDD and an SSD that stores various types of information. The storage unit 22 stores a control program for causing the operation control unit 21 to execute various types of control processes. For example, the control program is non-temporarily recorded in a computer-readable recording medium such as a CD and a DVD, and is read by a predetermined reading device (not illustrated) to be stored in the storage unit 22. The control program may be downloaded from a server (not illustrated) to the operation terminal 20 via the communication network N1 to be stored in the storage unit 22.

In addition, the storage unit 22 stores data of work vehicle information which is information related to the work vehicle 10, and target route information which is information related to a target route. The work vehicle information includes information such as a vehicle number and a model for each work vehicle 10. The vehicle number is identification information of the work vehicle 10. The model is a model of the work vehicle 10. The storage unit 22 may store the work vehicle information related to the one work vehicle 10, or may store the work vehicle information related to a plurality of the work vehicles 10. For example, in a case where a particular worker owns a plurality of the work vehicles 10, the work vehicle information related to each work vehicle 10 is stored in the storage unit 22.

The target route information includes information such as a route name, a field name, an address, field size, and work time for each target route. The route name is a route name of the target route generated in the operation terminal 20. The field name is a name of a field to be worked for which the target route is set. The address is an address of the field and the field size is size of the field. The work time is a time required to work in the field by the work vehicle 10.

In a case where the target route is a route corresponding to the road R0 (inter-field route), the target route information includes information such as a route name, an address, a travel distance, and travel time. The route name is a name of the road R0, and the address is an address of the road R0. The travel distance is a distance of traveling on the road R0 by the work vehicle 10, for example, a distance from the field F1 to the field F2. The travel time is time during which the work vehicle 10 travels on the road R0, and is, for example, time required to travel from the field F1 to the field F2.

The storage unit 22 may store the target route information related to the one work vehicle 10, or may store the target route information related to a plurality of the work vehicles 10. For example, in a case where a particular worker generates a plurality of the target routes for one or a plurality of fields owned by himself/herself, the target route information for each target route is stored in the storage unit 22. One target route may be set for one field, or a plurality of target routes may be set for one field. In addition, one inter-field route may be set for a set of fields, or a plurality of inter-field routes may be set for a set of fields. In this embodiment, target route information corresponding to the target route R (see FIG. 4) for traveling in the field F1, target route information corresponding to the target route R (see FIG. 4) for traveling in the field F2, and target route information corresponding to the inter-field route R12 (see FIG. 3) for traveling on the road R0 are stored in the storage unit 22.

In another embodiment, part or all of the information such as the work vehicle information and the target route information may be stored in a server that is accessible from the operation terminal 20. A worker may operate to register the work vehicle information and the target route information, in the server (such as a personal computer and a cloud server) described above. In this case, the operation control unit 21 may acquire the information from the server and execute various processes such as the automatic traveling process described below.

The operation control unit 21 has control devices such as a CPU, a ROM, and a RAM. The CPU is a processor that executes various arithmetic processes. The ROM is a non-volatile storage unit in which a control program such as a BIOS and an OS for causing the CPU to execute the various arithmetic processes are previously stored. The RAM is a volatile or non-volatile storage unit that stores various types of information and is used as a temporary storage memory (work area) for the various processes executed by the CPU. The operation control unit 21 controls the operation terminal 20 by causing the CPU to execute the various control programs previously stored in the ROM or the storage unit 12.

As illustrated in FIG. 1, the operation control unit 21 includes various processing units such as a setting processing unit 211, a reception processing unit 212, an acquisition processing unit 213, a generation processing unit 214, and an output processing unit 215. The operation control unit 21 functions as the various processing units by causing the CPU to execute the various processes according to the control programs. Further, some or all of the processing units may be configured by an electronic circuit. The control program may be a program for causing a plurality of processors to function as the processing unit.

The setting processing unit 211 sets information related to the work vehicle 10 (hereinafter referred to as "work vehicle information"), information related to the field (hereinafter referred to as "field information"), and information as to how to specifically perform work (hereinafter referred to as "work information"). The setting processing unit 211 receives worker setting operation on, for example, a menu screen D1 illustrated in FIG. 5, and registers each setting information.

Specifically, the setting processing unit 211 sets information related to the model of the work vehicle 10, the position where the positioning antenna 174 is mounted on the work vehicle 10, the type of the work machine 14, the size and the shape of the work machine 14, the position of the work machine 14 with respect to the work vehicle 10, the vehicle speed and the engine rotation speed of the work vehicle 10 during work, the vehicle speed and the engine rotation speed of the work vehicle 10 during turning, and the like by registration operation on the operation terminal 20 by the worker.

The setting processing unit 212 sets information related to the position and the shape of the field, the work start position (traveling start position) to start work, the work end position (traveling end position) to finish work, and the work direction, and the like by registration operation on the operation terminal 20.

For example, a worker who rides in the work vehicle 10, drives along an outer periphery of the field once, and records a transition of the position information of the positioning antenna 174 at that time, so that the information on the position and the shape of the field can be acquired automatically. Further, the position and the shape of the field can be acquired on the basis of a polygon shape acquired by operation of the operation terminal 20 while displaying a map on the operation terminal 20, and by designation of a plurality of points on the map by the worker. Additionally, the worker can set a predetermined margin area from an edge within the field. The set margin area is set to the non-work area Fb, and an area other than the margin area is set to the work area Fa (see FIG. 4). In addition, regardless of the worker setting operation, the operation control unit 21 may automatically secure the margin area on the basis of the field information, the work vehicle information, the work information, and the like, and set the work area Fa and the non-work area Fb.

The setting processing unit 211 is configured to set, as the work information, presence or absence of cooperative work between the work vehicle 10 (unmanned tractor) and the manned work vehicle 10, the skip number, which is the number of work routes skipped when the work vehicle 10 turns in the headland, the width of the headland, the width of the non-cultivated land, and the like.

Further, the setting processing unit 211 generates the target route R for allowing the work vehicle 10 to automatically travel in the field, on the basis of each of the setting information. Specifically, the setting processing unit 211 generates the target route R in the field F on the basis of the traveling start position S and the traveling end position G registered in field setting.

For example, as illustrated in FIG. 4, the setting processing unit 211 generates the target route R including the traveling start position S, the traveling end position G, the straight route, and the turning route on the basis of the worker setting operation. The setting processing unit 211 registers the generated target route R in association with the field F.

Herein, the operation control unit 21 generates the inter-field route of the road R0 that connects a plurality of fields on the basis of operation by the worker (teaching operation), as described below.

Specifically, the reception processing unit 212 receives worker traveling operation. For example, the reception processing unit 212 receives traveling operation (manual steering) for causing the work vehicle 10 to manually travel from the field F1 to the field F2. The acquisition processing unit 213 acquires the position information of the work vehicle 10 that travels on the road R0 connecting the field F1 and the field F2 from the positioning unit 17 on the basis of the traveling operation by the worker. The generation processing unit 214 generates the inter-field route R12 for allowing the work vehicle 10 to automatically travel between the field F1 and the field F2 on the basis of the position information acquired on the basis of the traveling operation by the worker.

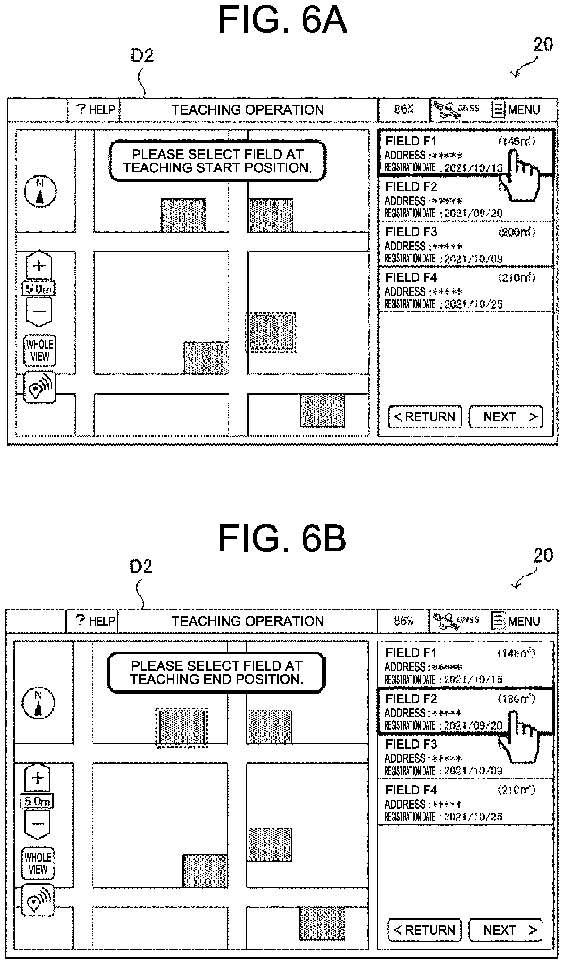

For example, the reception processing unit 212 displays a teaching operation screen D2 and receives operation for selecting a field from the worker (see FIG. 6A and FIG. 6B). A list of field information for a plurality of fields registered by the setting processing unit 211 is displayed on the teaching operation screen D2. The worker selects a plurality of fields that are targets of the inter-field route on the teaching operation screen D2.

When the reception processing unit 212 receives operation for selecting a plurality of the fields that are the targets of the inter-field route from the worker, the reception processing unit 212 receives operation for starting teaching traveling. For example, the worker brings the operation terminal 20 in the work vehicle 10 and causes the work vehicle to travel on the road R0 (see FIG. 3) from the field F1 to the field F2 manually while confirming a guidance route displayed on the operation terminal 20. The acquisition processing unit 213 acquires position information and traveling speed information of the work vehicle 10 while the worker causes the work vehicle 10 to perform teaching traveling on the road R0. The acquisition processing unit 213 may also acquire information related to the road R0 during teaching traveling (for example, information on an obstacle, a road surface status, a road width, a stop line, speed limit, a traffic light, and the like).

When the worker drives the work vehicle 10 to the field F2, and the work vehicle 10 arrives at the field F2, the worker presses an end button on the teaching operation screen D2. When the worker presses the end button, the reception processing unit 212 receives end operation for the teaching traveling. When the reception processing unit 212 receives the end operation, the generation processing unit 214 generates the inter-field route R12 for allowing the work vehicle 10 to automatically travel between the field F1 and the field F2, on the basis of the position information of the work vehicle 10 acquired by the acquisition processing unit 213. Specifically, the generation processing unit 214 connects the entrance H1 of the field F1 and the entrance H2 of the field F2, as illustrated in FIG. 3, and generates the inter-field route R12 that passes on the road R0.

When the worker confirms the inter-field route R12 on the teaching operation screen D2 and presses a registration button, the generation processing unit 214 registers the inter-field route R12 in association with the field F1 and the field F2.

When a worker causes the work vehicle 10 to start automatic traveling, the worker selects a plurality of the fields and selects the inter-field route for automatic traveling between the fields. For example, when the worker selects the field F1 and the field F2, selects the target route R in the field F1 and the target route R in the field F2, and selects the inter-field route R12 for moving between the field F1 and the field F2, and presses a start button, the output processing unit 215 outputs route data of the target route and the inter-field route to the work vehicle 10.

Herein, the output processing unit 215 outputs, to the work vehicle 10, route data including the target route R that is the work route in the field F1, the target route R that is the work route in the field F2, and the inter-field route R 12 that is the inter-field route connecting the field F1 and the field F2.

The work vehicle 10 stores the route data generated in the operation terminal 20 in the storage unit 12 when the route data is transferred to the work vehicle 10. The work vehicle 10 detects a current position of the work vehicle 10 using the positioning antenna 174 and executes the automatic traveling process on the basis of the route data. The current position of the work vehicle 10 usually coincide with the position of the positioning antenna 174.

The work vehicle 10 is configured to be able to automatically travel in the work area Fa, in a case where the current position coincides with the traveling start position S (see FIG. 4) in the work area Fa.

For example, in a case where the current position coincides with the traveling start position S of the field F1 (in a case where the automatic travel start condition is satisfied), when the worker presses the start button on the operation screen (not illustrated) to give the travel start instruction, the work vehicle 10 starts automatic traveling of the target route R by the travel processing unit 111 of the work vehicle 10.

Herein, after the work vehicle 10 starts automatic traveling, a situation in which specific work must be performed during the automatic traveling may arise. For example, when fuel falls below a specified amount while the work vehicle 10 is automatically traveling in the work area Fa, the fuel replenishment work is required. When the fuel replenishment work is required, the work vehicle 10 stops the automatic traveling at that point. In this case, in this embodiment, the worker can cause the work vehicle 10 to move up to the work space A1 in the field F (see FIG. 4) for the replenishment work, or can suspend the replenishment work and continue the work up to the traveling end position G in a case where the work is about to end.

For example, when fuel falls below the specified amount while the work vehicle 10 is automatically traveling in the work area Fa, the operation control unit 21 displays a warning message on the traveling screen D3 (see FIG. 7). The worker recognizes the warning message, confirms safety of the surroundings of the work vehicle 10 using the camera image, and presses a forced traveling button. When the worker presses the forced traveling button, the output processing unit 215 outputs operation information including the forced traveling instruction to the work vehicle 10. When the vehicle control device 11 of the work vehicle 10 acquires the operation information, the vehicle control device 11 forces the work vehicle 10 to automatically travel from a position where the work is interrupted (work interruption position) to the work space A1, as illustrated in FIG. 8. In addition, in a case where the generation processing unit 214 generates a traveling route Ra (an example of a non-work route of the present invention) from the work interruption position to the work space A1, when the forced traveling button is pressed by the worker, the vehicle control device 11 may causes the work vehicle 10 to automatically travel in accordance with the traveling route Ra. Further, the vehicle control device 11 may cause the work vehicle 10 to automatically travel on an extension line of the target route R up to the non-work area Fb instead of the traveling route Ra.

In addition, the vehicle control device 11 causes the work vehicle 10 to automatically travel from the work interruption position to the edge of the work area Fa, regardless of the forced traveling instruction by the worker, and in a case of traveling from the edge of the work area Fa to the work space A1 in the non-work area Fb, the forced travel instruction by the worker may be a condition for permitting automatic traveling.

In another embodiment, in a case where the worker presses the forced traveling button, the vehicle control device 11 may cause the work vehicle 10 to continue automatic traveling from the position at which the work is interrupted (work interruption position) toward the traveling end position G in accordance with the target route R. For example, the worker may be able to select whether to cause the work vehicle 10 to automatically travel to the work space A1 or to cause the work vehicle 10 to automatically travel to the traveling end position G on the traveling screen D3. Further, the operation control unit 21 may display an option of causing the work vehicle 10 to automatically travel from the work interruption position to the traveling end position G on the condition that the work vehicle 10 has enough fuel to travel from the work interruption position to the traveling end position G.

In another embodiment, in order to ensure that the worker confirms safety of the surroundings of the work vehicle 10, automatic traveling of the work vehicle 10 in the non-work area Fb may be permitted only while the worker is pressing the forced traveling button. For example, the vehicle control device 11 permits the automatic traveling of the work vehicle 10 while the worker presses the forced traveling button, and stops the automatic traveling of work vehicle 10 when the worker releases his/her hand from the forced traveling button. Furthermore, as another embodiment, the automatic traveling of the work vehicle 10 in the non-work area Fb may be permitted in a case where the worker continuously presses the forced traveling button for predetermined time. In this case, the vehicle control device 11 does not start automatic traveling and maintains the stopped state in a state where the forced traveling button is pressed for less than the predetermined time.

In another embodiment, in a case where the warning message is displayed on the traveling screen D3 (see FIG. 7) and the worker is looking at the camera image on the traveling screen D3, the output processing unit 215 outputs action information including the forced traveling instruction to the work vehicle 10. When the vehicle control device 11 of the work vehicle 10 acquires the action information, the work vehicle 10 is forced to automatically travel from the position at which the work is interrupted (work interruption position) to the work space A1.

In order to ensure that the worker confirms the safety of the surroundings of the work vehicle 10, the automatic traveling of the work vehicle 10 in the non-work area Fb is permitted only while the worker is looking at the camera image. For example, the vehicle control device 11 permits the automatic traveling of the work vehicle 10 while the line of sight of the worker is directed to the camera image on the traveling screen D3, and stops the automatic traveling of the work vehicle 10 when the worker looks away from the camera image. In another embodiment, the automatic traveling of the work vehicle 10 in the non-work area Fb may be permitted when the worker continuously looks at the camera image for predetermined time. In this case, the vehicle control device 11 does not start automatic traveling and maintains the stopped state in a case where time for looking at the camera image is less than the predetermined time.

Furthermore, in a case where the worker presses a "No" button on the traveling screen D3, the vehicle control device 11 does not permit automatic traveling, but receives manual steering by the worker and causes the work vehicle 10 to travel manually.

The specific work required while the work vehicle 10 is automatically traveling is not limited to work in the work space A1 (such as the replenishment work and the discharging work). For example, while the work vehicle 10 is automatically traveling in the work area Fa, it may be necessary to regenerate a diesel particulate filter (DPF) or may be necessary to perform replenishment work for urea water. When these specific works are required, the work vehicle 10 temporarily stops the automatic traveling at that point. Similarly, for such specific work, the worker permits the automatic traveling by pressing the forced traveling button (see FIG. 7) or giving a forced traveling instruction by directing the line of sight to the camera image, moves the work vehicle 10 to the edge of the field F (non-work area Fb) or suspends the specific work to continue the work up to the traveling end position G when the work is about to end.

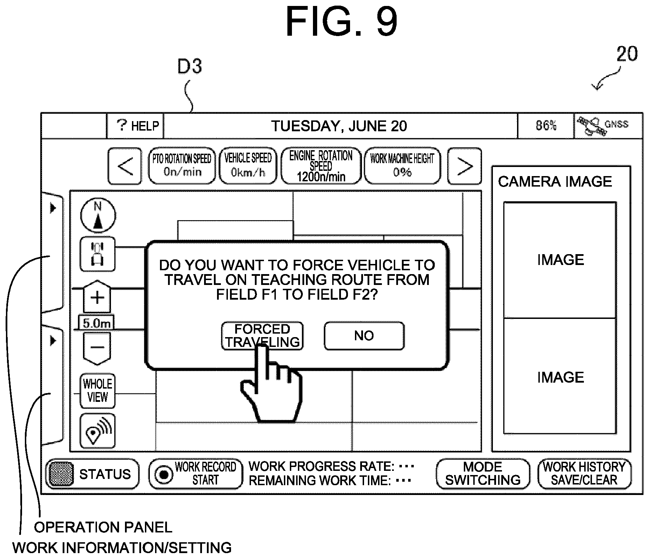

Similarly, in a case where the work vehicle 10 travels on a road outside the field (an example of the non-work area), the vehicle control device 11 permits the automatic traveling of the work vehicle 10 on the condition that the predetermined confirmation operation or confirmation action is performed. For example, when the work vehicle 10 finishes work in the field F1 and starts moving toward the field F2, the operation control unit 21 displays the traveling screen D3 illustrated in FIG. 9. When the worker presses the forced traveling button on the traveling screen D3 of the operation terminal 20, the output processing unit 215 outputs the operation information including the forced traveling instruction to the work vehicle 10. When the vehicle control device 11 of the work vehicle 10 acquires the operation information, the vehicle control device 11 permits the work vehicle 10 to automatically travel on the road R0 (inter-field route R12) (see FIG. 3). Additionally, the vehicle control device 11 may permit the automatic traveling of the work vehicle 10 on the inter-field route R12 only while the worker is pressing the forced traveling button. The inter-field route R12 is an example of the non-work route of the present invention.

In addition, the vehicle control device 11 may permit the automatic traveling of the work vehicle 10 in the inter-field route R12 only in a case where the line of sight of the worker is directed to the camera image on the traveling screen D3, or only while the worker is looking at the camera image on the traveling screen D3.

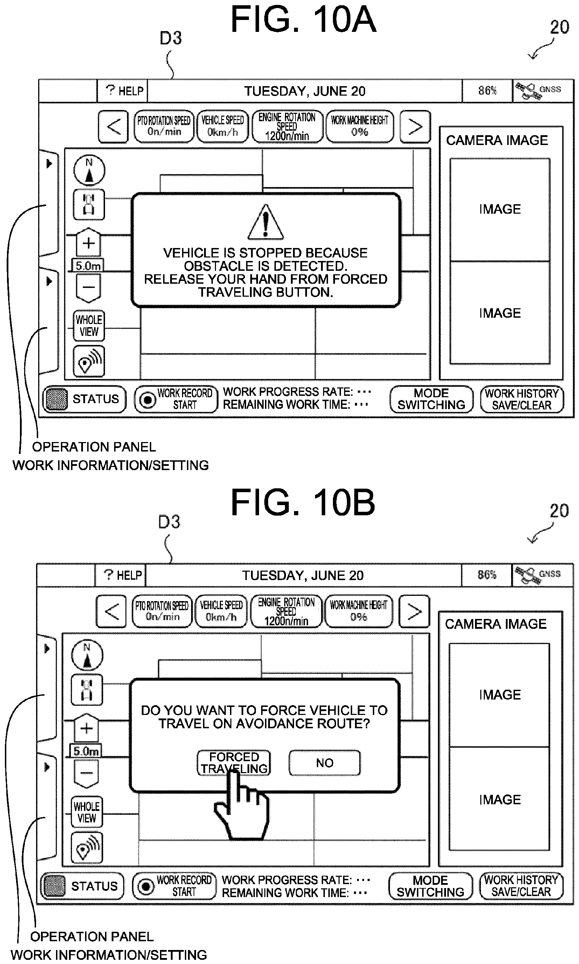

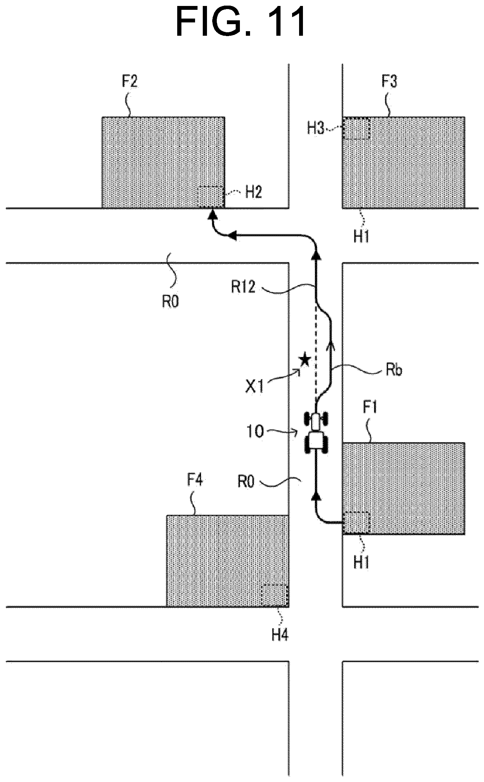

Herein, when the work vehicle 10 detects an obstacle X1 (see FIG. 11) while automatically traveling on the inter-field route R12, the vehicle control device 11 stops the work vehicle 10. On the traveling screen D3, as illustrated in FIG. 10B, a message indicating that the obstacle X1 is detected is displayed. In addition, in a case of a configuration in which the automatic traveling on the inter-field route R12 is permitted only while the worker continues to press the forced traveling button, when the work vehicle 10 detects the obstacle X1, the vehicle control device 11 disables the press operation of the forced traveling button and stops the automatic traveling. In this case, a message for prompting the worker to release his/her hand from the forced traveling button is displayed on the traveling screen D3 (see FIG. 10A).

When the work vehicle 10 detects the obstacle X1 and temporarily stops, and the worker releases his/her hand from the forced traveling button, the operation control unit 21 displays, on the traveling screen D3, a message asking if he/she wants to force the work vehicle 10 to travel on the avoidance route for avoiding the obstacle X1, as illustrated in FIG. 10B. On the traveling screen D3 illustrated in FIG. 10B, when the worker presses the forced traveling button, the vehicle control device 11 permits the automatic traveling and causes the work vehicle 10 to travel on the avoidance route.

For example, as illustrated in FIG. 11, the vehicle control device 11 causes the work vehicle 10 to move backward from a temporary stop position, and then automatically travel on an avoidance route Rb for passing beside the obstacle X1, and return to the original the inter-field route R12. The vehicle control device 11 may permit the automatic traveling on the avoidance route Rb only while the worker is pressing the forced traveling button.

Additionally, the vehicle control device 11 may temporarily stop the work vehicle 10 when the work vehicle 10 returns from the avoidance route Rb to the inter-field route R12. Herein, the vehicle control device 11 disables the pressing operation of the forced traveling button and stops the automatic traveling, and a message for prompting the worker to release his/her hand from the forced traveling button is displayed on the traveling screen D3. When the worker confirms with the camera image that the work vehicle 10 passes through the obstacle X1 and returns to the inter-field route R12, the worker presses the forced traveling button again. Consequently, the vehicle control device 11 permits the automatic traveling on the inter-field route R12 and causes the work vehicle 10 to automatically travel toward the field F2.

In another embodiment, in a case where the line of sight of the worker is directed to the camera image, the vehicle control device 11 may permit the automatic traveling on the inter-field route R12, and the automatic traveling on the avoidance route Rb (see FIG. 11) when the obstacle X1 is detected.

In another embodiment, the vehicle control device 11 may always permit the automatic traveling on the inter-field route R12 and the automatic traveling on the avoidance route Rb in a case where an obstacle is detected, while the worker presses the forced traveling button or while the worker is looking at the camera image. According to this configuration, there is no need that the worker releases the forced traveling button once and presses the forced traveling button again, or the worker turns the line of sight away from the camera image and redirect the line of sight, and therefore operability is improved.

In the above embodiment, in a case where specific work is required in the work vehicle 10 and in a case where the work vehicle 10 travels on the inter-field route (outside the work area), automatic traveling is permitted on the condition that the predetermined confirmation operation or confirmation action by the worker is performed. However, as another embodiment, in a case where the work vehicle 10 becomes difficult to continue automatic traveling during the automatic traveling, the work vehicle 10 may be configured to permit the automatic traveling on the condition that the predetermined confirmation operation or confirmation action by the worker is performed.

For example, in a case where the work vehicle 10 deviates from the target route R while automatically traveling in accordance with the target route R, and there is a possibility that the work vehicle 10 flies out of the field, the vehicle control device 11 stops the automatic traveling of the work vehicle 10. In this case, the vehicle control device 11 may permit automatic traveling on the condition that the predetermined confirmation operation or confirmation action by the worker is performed.

As described above, the vehicle control device 11 causes the work vehicle 10 to travel automatically in the work area Fa in a case where the work vehicle 10 satisfies a traveling start condition, and the vehicle control device 11causes the work vehicle 10 to automatically travel in the non-work area (such as the non-work area Fb and the road R0) in a case where the predetermined confirmation operation or confirmation action by the worker is performed. Furthermore, the vehicle control device 11 may cause the work vehicle 10 to automatically travel in the work area Fa only while the confirmation operation or the confirmation action by the worker is being performed.

Further, in a case where the work vehicle 10 moves from the work area Fa to the non-work area (such as the non-work area Fb and the road R0), in a case where the specific work is required, or in a case where continuation of the automatic traveling becomes difficult, the operation control unit 21 also causes the operation terminal 20 to display a reception screen (traveling screen D3) that receives confirmation operation (forced traveling instruction) from the worker (FIG. 7).

In addition, in a case where the work vehicle 10 that is automatically traveling in the non-work area enters a predetermined state, the work vehicle 10 is caused to automatically travel only while the confirmation operation or the confirmation action by the worker is being performed. The predetermined state is, for example, a state in which an obstacle that becomes an obstacle to automatic traveling based on the inter-field route R12 (see FIG. 11) preset on the road R0 in the non-work area is detected, or a state in which specific work is required in the work vehicle 10.

The vehicle control device 11 causes the work vehicle 10 to temporarily stop in a case where an obstacle is detected while the work vehicle 10 is automatically traveling. Thereafter, in a case where the obstacle is no longer detected before the confirmation operation or the confirmation action by the worker is performed, the automatic traveling based on the inter-field route R12 may be resumed.

Thus, in this embodiment, even in an environment in which a stop condition for automatic traveling is satisfied, movement by the automatic traveling is temporarily permitted through safety confirmation and confirmation operation by the worker (supervisor). In a case where it is determined that the worker confirms safety and clearly indicates the intention of automatic traveling, even in an area where unmanned automatic traveling is restricted, the instruction by the worker is prioritized and automatic traveling outside the work area (such as the non-work area Fb and the inter-field route R12) is permitted.

The operation terminal 20 may be able to access an agricultural support service website (agricultural support site) provided by a server (not illustrated) via the communication network N1. In this case, the operation terminal 20 can function as an operation terminal for the server by executing a browser program by the operation control unit 21. The server includes each of the above-mentioned processing units and executes each process.

### [Automatic Traveling Process]

Hereinafter, referring to FIG. 12, an example of the automatic traveling process executed by the automatic traveling system 1 will be described.

The present invention can be regarded as an invention of an automatic traveling method (an example of a traveling control method of the present invention) that executes one or more steps included in the automatic traveling process. Furthermore, one or more steps included in the automatic traveling process described herein may be omitted as appropriate. Each step in the automatic traveling process may be executed in a different order as long as the same effect is produced. Furthermore, the case where the vehicle control device 11 executes each step in the automatic traveling process will be herein described as an example, but an automatic traveling method where one or more processors execute each step in the automatic traveling process in a distributed manner is also considered as another embodiment.

In Step S1, the vehicle control device 11 determines whether or not the work vehicle 10 is in a state in which automatic traveling is possible. When the work vehicle 10 satisfies the automatic travel start condition (S1: Yes), the vehicle control device 11 shifts the process to Step S2. The vehicle control device 11 waits until the work vehicle 10 satisfies the automatic travel start condition (S1: No).

In Step S2, the vehicle control device 11 causes the work vehicle 10 to start the automatic traveling. For example, when a worker issues a travel start instruction on the operation screen of the operation terminal 20, the operation control unit 21 outputs the travel start instruction to the work vehicle 10. When the vehicle control device 11 acquires the travel start instruction from the operation terminal 20, the vehicle control device 11 causes the work vehicle 10 to start the automatic traveling. Consequently, the work vehicle 10 starts the automatic traveling in the work area Fa of the field F in accordance with the target route R (see FIG. 4), and work by the work machine 14 starts.

Next, in Step S3, the vehicle control device 11 determines whether or not the work vehicle 10 is in a predetermined state. Herein, the predetermined state includes various states that make it difficult to continue automatic traveling such as the case where the work vehicle 10 detects an obstacle during automatic traveling, the case where specific work (such as the fuel replenishment work, the discharging work for objects to be worked (such as reaped materials and harvested materials), the DPF regeneration work, and the urea water replenishment work) is required, the case of traveling in the non-work area Fb, the case of traveling outside the field (road R0), the case of deviating from the target route R, and the case where there is a possibility of jumping out of the field.

When the vehicle control device 11 determines that the work vehicle 10 is in the predetermined state (S3: Yes), the vehicle control device 11 shifts the process to Step S4. When the vehicle control device 11 determines that the work vehicle 10 is not in the predetermined state (S3: No), the process proceeds to Step S8.

In Step S4, the vehicle control device 11 temporarily stops the automatically traveling work vehicle 10. Specifically, the vehicle control device 11 causes the work vehicle 10 to temporarily stop at a position when the automatically traveling work vehicle 10 enters the predetermined state.

Next, in Step S5, the vehicle control device 11 determines whether or not a forced traveling instruction by the worker acquires from the operation terminal 20. For example, in a case where the work vehicle 10 enters a predetermined state, the operation control unit 21 of the operation terminal 20 displays a predetermined message on the traveling screen D3 and also displays the operation button (forced travel button) that receives the forced traveling instruction (see FIG. 7, FIG. 9 and other figures). When the worker presses the forced traveling button on the traveling screen D3, the vehicle control device 11 acquires the forced traveling instruction from the operation terminal 20.

In another embodiment, the vehicle control device 11 acquires the forced traveling instruction from the operation terminal 20 when the line of sight of the worker points is directed to the camera image displayed on the traveling screen D3 (see FIG. 9).

When the vehicle control device 11 acquires the forced traveling instruction (S5: Yes), i the vehicle control device 11 moves the process to Step S6. In a case where the vehicle control device 11 does not acquire the forced traveling instruction (S5: No), the process proceeds to Step S8.

In Step S6, the vehicle control device 11 permits the automatic traveling and causes the work vehicle 10 to resume the automatic traveling. For example, in a case where the work vehicle 10 needs to be refueled during the automatic traveling (S3: Yes), when the vehicle control device 11 acquires the forced traveling instruction (S5: Yes), and the vehicle control device 11 resume the automatic traveling of the work vehicle 10 and causes the work vehicle 10 to automatically travel up to the work space A1 on the traveling route Ra (see FIG. 8).

Further, for example, in a case where the work vehicle 10 moves from the field F1 to the field F2 (S3: Yes), when the vehicle control device 11 acquires the forced traveling instruction (S5: Yes), the vehicle control device 11 resumes the automatic traveling of the work vehicle 10 and causes the work vehicle 10 to automatically travel on the inter-field route R12 (see FIG. 3).

Next, in Step S7, the vehicle control device 11 determines whether or not the forced traveling instruction is canceled. For example, on the traveling screen D3 (see FIG. 9), when the worker the worker releases his/her hand from the forced traveling button, the vehicle control device 11 determines that the forced traveling instruction is canceled. On the traveling screen D3, while the worker continues to press the forced traveling button, the vehicle control device 11 determines that the forced traveling instruction is not canceled. For example, on the traveling screen D3, when the worker removes the line of sight from the camera image, the vehicle control device 11 determines that the forced traveling instruction is canceled. On the traveling screen D3, while the worker continues to look at the camera image, the vehicle control device 11 determines that the forced traveling instruction is canceled.

When the vehicle control device 11 determines that the forced traveling instruction is canceled (S7: Yes), the process proceeds to Step S4. That is, while the forced traveling instruction is acquired (for example, while the forced traveling button is pressed (ON)), the vehicle control device 11 permits the automatic traveling (S6), and each time the forced traveling instruction is canceled (the forced traveling button is turned off), the vehicle control device 11 stops the automatic traveling (S4). When the vehicle control device 11 determines that the forced traveling instruction is not canceled (S7: No), the process proceeds to Step S8.

In Step S8, the vehicle control device 11 determines whether or not the work vehicle 10 finishes automatic traveling. For example, when the work vehicle 10 reaches the traveling end position G (see FIG. 3), the vehicle control device 11 determines that the work vehicle 10 finishes automatic traveling (S8: Yes), and starts the automatic traveling process. The vehicle control device 11 repeatedly executes the processes of Steps S3 to S7 until the work vehicle 10 reaches the traveling end position G (S8: No). As described above, the vehicle control device 11 executes the automatic traveling process.

As described above, the automatic traveling system 1 according to this embodiment controls the traveling of the work vehicle 10 that is capable of automatically traveling. In addition, in the work area Fa, in a case where the work vehicle 10 satisfies the traveling start condition, the automatic traveling system 1 causes the work vehicle 10 to automatically travel. In the non-work areas outside the work area Fa (such as the non-work area Fb and the area outside the field), in a case where the predetermined confirmation operation or confirmation action by the worker is performed, the automatic traveling system 1 causes the work vehicle 10 to automatically travel. In other words, the automatic traveling system 1 permits the work vehicle 10 to automatically travel in the non-work areas, on the condition of safety confirmation (monitoring) by the workers.

According to the above configuration, safety can be ensured when the work vehicle 10 automatically travels in the non-work area. In addition, the worker can confirm the surrounding situation of the work vehicle 10 using the camera image mounted on the work vehicle 10 in a remote location, for example, and give an instruction on automatic traveling.

In addition, the automatic traveling system 1 can be configured to permit the work vehicle 10 to automatically travel, for example, only while the worker continues to confirm safety (for example, while the worker is pressing the forced traveling button or the line of sight of the worker is directed to the camera image). According to this configuration, the automatic traveling is stopped in a case where the worker neglects the safety confirmation, and therefore it is possible to further improve safety when the work vehicle 10 travels in the non-work area.

The confirmation operation and the confirmation action are not limited to the worker's input operation (button press operation) on the operation terminal 20, and the action of looking at the camera image displayed on the operation terminal 20. For example, the confirmation operation and the confirmation action may be action in which the worker inputs (utters) an automatic traveling start instruction by voice. For example, the vehicle control device 11 permits automatic traveling when the worker utters and the voice of the start instruction is acquired. Furthermore, the vehicle control device 11 may permit automatic traveling only while the voice is being input.

The present invention is not limited to the above embodiments, but may be the following embodiments.

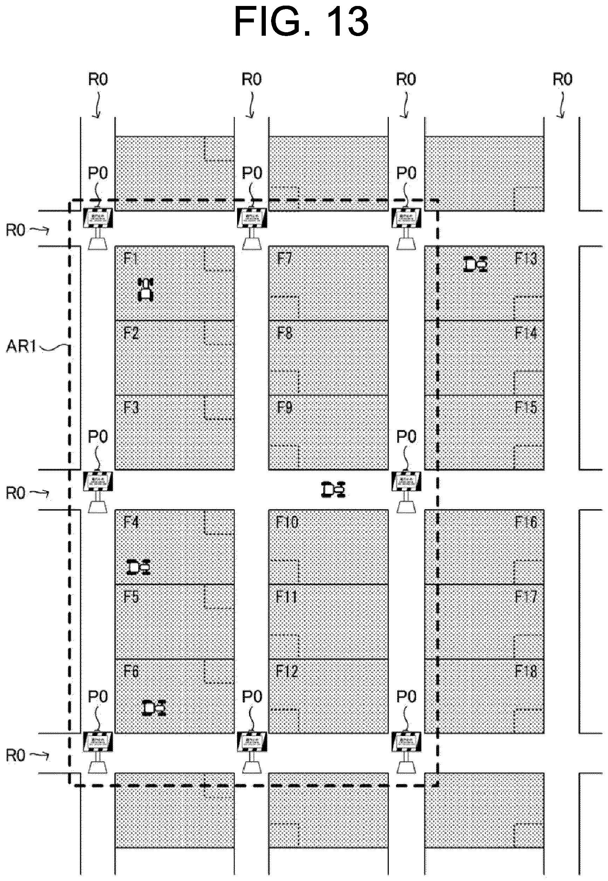

In another embodiment, the automatic traveling system 1 may set an automatic traveling permission area where the automatic traveling of the work vehicle 10 is permitted, in the non-work area. For example, as illustrated in FIG. 13, the worker closes a range surrounding the fields F1 to F12 and blocks the road R0 for entering the fields F1 to F12 so as to prevent a third party from entering. Specifically, the worker installs a sign P0 at each entry position to the entire area on the road R0 that surrounds the entire area of the fields F1 to F12. In the example illustrated in FIG. 13, the worker installs the signs P0 at 8 locations on the road R0. The signs P0 are installed, it is possible to alert a third party.

The operation control unit 21 sets a range specified on the basis of the position information of each of the plurality of signs P0 installed on the road R0 as an automatic traveling permission area AR1. Each sign P0 is a signboard including a transmission part that can transmit position information (latitude and longitude information) and a display part that displays the information that entry into the automatic traveling permission area AR1 is prohibited ("Road Closed").

When the operation control unit 21 acquires position information from each of the eight sign PCs installed on the road R0, the range surrounding the road R0 connecting the positions of the signs P0 is set as the automatic traveling permission area AR1. When the automatic traveling permission area AR1 is set, the operation control unit 21 may display a frame image of the automatic traveling permission area AR1 on the map displayed on the operation terminal 20. Further, the setting processing unit 211 may display position information of one or more work vehicles 10 that can communicate with the operation terminal 20. In addition, instead of the sign P0, the automatic traveling permission area AR1 may be set by registration of a blockade point on the map by the worker.

When the automatic traveling permission area AR1 is set, the vehicle control device 11 permits the first work vehicle 10 that enters the automatic traveling permission area AR1 to automatically travel, regardless of whether or not there is the confirmation operation or the confirmation action by the worker, and the vehicle control device 11 permits the second and subsequent work vehicles 10 that enter the automatic traveling permission area AR1 to automatically travel only while the confirmation operation or the confirmation action by the worker is being performed. For example, in a case where the first work vehicle 10 automatically travels on the road R0 in the automatic traveling permission area AR1, safety is ensured because no other vehicles are present. In this case, the vehicle control device 11 permits the automatic traveling of the work vehicle 10 regardless of a forced traveling instruction by the worker.

On the other hand, in a case where the work vehicle 10 that is automatically traveling on the road R0 already exists, and another work vehicle 10 enters the road R0 to performs automatic traveling, there is a risk of coming into contact with the automatically traveling work vehicle 10. In this case, the vehicle control device 11 permits the automatic traveling of the second and subsequent work vehicles 10, on the condition of the forced traveling instruction by the worker. Consequently, a plurality of the work vehicles 10 can safely perform automatic traveling within the automatic traveling permission area AR1.

In the above example, automatic traveling is permitted for the second and subsequent work vehicles 10 on the condition that confirmation operation or confirmation action by the worker is being performed, but in another embodiment, automatic traveling may be permitted for the Nth (N is 3 or more) work vehicle 10 and subsequent work vehicles 10 on the condition of the confirmation operation or the confirmation action by the worker. In another embodiment, the worker may be able to set a value of the "N". In another embodiment, the worker may be able to set or switch the work vehicle 10 that requires confirmation operation or confirmation action. For example, the vehicle control device 11 permits automatic traveling of the one or more specific work vehicles 10 selected by the worker among the plurality of work vehicles 10, on the condition of the confirmation operation or the confirmation action by the worker. In another embodiment, the vehicle control device 11 automatically switches between permission of the automatic traveling for the work vehicle 10 on the condition of the confirmation operation or the confirmation action by the worker, or no need for this condition. For example, the vehicle control device 11 may switch whether or not the above conditions are necessary on the basis of information such as a work content, a current position, a target route, and a vehicle speed of the work vehicle 10. In another embodiment, the vehicle control device 11 may permit automatic traveling for all the work vehicles 10 in the automatic traveling permission area AR1, on the condition of confirmation operation or confirmation action by the worker.

In addition, in a case where a measure is taken to prohibit a vehicle, which is not related to work, from entering the automatic traveling permission area AR1, the vehicle control device 11 may permit the work vehicle 10 to automatically travel in the automatic traveling permission area AR1, regardless of whether or not there is the confirmation operation or the confirmation action by the worker. In addition, in a case where the above measure is not taken in the automatic traveling permission area AR1, the vehicle control device 11 may permit automatic traveling of the work vehicle 10 in the automatic traveling permission area AR1 only while the confirmation operation or the confirmation action is being performed by the worker. The vehicle which is not related to work includes a general vehicle which is not related to work, excluding a work vehicle that perform work in the field, a transportation vehicle which transports waste, replenishment vehicle that replenishes supplies, and the like. The measure to prohibit the entry of the vehicle include, for example, a measure to install the sign P0.

In a case where the vehicle which is not related to work is prohibited from entering, the safety within the automatic traveling permission area AR1 is ensured, and therefore the vehicle control device 11 may permit the automatic traveling regardless of the confirmation operation or the confirmation action by the worker. On the other hand, in a case where the entry of the vehicle which is not related to work is not prohibited, the safety within the automatic traveling permission area AR1 is insufficient, and therefore the vehicle control device 11 permits the automatic traveling on the condition of the confirmation operation or the confirmation action by the worker.

As another embodiment of the present invention, in a case where the work vehicle 10 detects an obstacle during automatic traveling, the vehicle control device 11 may cause the work vehicle 10 to temporarily stop and then cause the work vehicle 10 to perform avoidance traveling 10 with remote control by the worker. For example, in a case where the work vehicle 10 detects an obstacle, the worker remotely performs manual steering by operating a steering device while confirming the camera image on the operation terminal 20. The vehicle control device 11 causes the work vehicle 10 to travel in response to manual steering. In addition, the vehicle control device 11 receives an automatic traveling start instruction from the worker in a case where the work vehicle 10 passes through the obstacle and returns to the target route and is in a state in which the automatic traveling can be resumed. When the vehicle control device 11 receives the start instruction, the vehicle control device 11 causes the work vehicle 10 to resume the automatic traveling.

As described above, in the above embodiment, the vehicle control device 11 corresponds to the traveling control system according to the present invention, but the traveling control system according to the present invention may be composed of the operation terminal 20 alone, or may include the work vehicle 10 and the operation terminal 20.

### [Appendixes of Invention]

Hereinafter, the summary of the invention extracted from the embodiments will be appended. Each configuration and each processing function described in the following appendixes can be selected and combined arbitrarily.

### <Appendix 1>

A traveling control method for controlling traveling of a work vehicle capable of automatically traveling, the traveling control method comprising execution of:
causing the work vehicle to automatically travel in a work area in a case where the work vehicle satisfies a traveling start condition; and
causing the work vehicle to automatically travel in a non-work area in a case where predetermined confirmation operation or confirmation action by a worker is performed.

### <Appendix 2>

The traveling control method described in Appendix 1, wherein
in the non-work area, the work vehicle is caused to automatically travel only while the confirmation operation or the confirmation action by the worker is being performed.

### <Appendix 3>

The traveling control method according to Appendix 1 or Appendix 2, wherein
in a case where the work vehicle moves from the work area to the non-work area, a reception screen that receives the confirmation operation from the worker is displayed on an operation terminal.

### <Appendix 4>

The traveling control method according to Appendix 2 or Appendix 3, wherein
in a case where the work vehicle that is automatically traveling in the non-work area enters a predetermined state, the work vehicle is caused to automatically travel only while the confirmation operation or the confirmation action by the worker is being performed.

### <Appendix 5>

The traveling control method according to Appendix 4, wherein
the predetermined state is a state in which an obstacle that becomes an obstacle to automatic traveling based on a non-work route preset in the non-work area is detected, or a state in which specific work is required in the work vehicle.

### <Appendix 6>

The traveling control method according to Appendix 5, wherein
in a case where the obstacle is detected while the work vehicle is automatically traveling, the work vehicle is stopped temporarily, and then in a case where the obstacle is not detected before the confirmation operation or the confirmation action by the worker is performed, the automatic traveling based on the non-work route is resumed.

### <Appendix 7>

The traveling control method according to Appendix 2 to Appendix 6, wherein
in the non-work area, an automatic traveling permission area where the automatic traveling of the work vehicle is permitted is set,
the first work vehicle that enters the automatic traveling permission area is permitted to automatically travel regardless of whether or not there is the confirmation operation or the confirmation action by the worker, and
the second and subsequent work vehicles that enter the automatic traveling permission area is permitted to automatically travel only while the confirmation operation or the confirmation action by the worker is being performed.

### <Appendix 8>

The traveling control method according to Appendix 2 to Appendix 7, wherein
in the non-work area, an automatic traveling permission area where the automatic traveling of the work vehicle is permitted is set,
in a case where a measure is taken to prohibit a vehicle, which is not related to work, from entering the automatic traveling permission area, the work vehicle in the automatic traveling permission area is permitted to automatically travel regardless of whether or not there is the confirmation operation or the confirmation action by the worker,
in a case where the measure is not taken in the automatic traveling permission area, the work vehicle in the automatic traveling permission area is permitted to automatically travel only while the confirmation operation or the confirmation action by the worker is being performed.

### REFERENCE SIGNS LIST

1 automatic traveling system
10 work vehicle
11 vehicle control device
20 operation terminal
21 operation control unit
53 camera
54 obstacle sensor
111 travel processing unit
112 acquisition processing unit
211 setting processing unit
212 reception processing unit
213 acquisition processing unit
214 generation processing unit
215 output processing unit
A1 work space
AR1 automatic traveling permission area
D1 menu screen
D2 teaching operation screen
D3 traveling screen
F field
Fa work area
Fb non-work area
P0 sign
R target route
R0 road
R12 inter-field route (non-work route)
Ra traveling route (non-work route)
Rb avoidance route (non-work route)

## Claims

1. A traveling control method for controlling traveling of a work vehicle capable of automatically traveling, the traveling control method comprising execution of:
causing the work vehicle to automatically travel in a work area in a case where the work vehicle satisfies a traveling start condition; and
causing the work vehicle to automatically travel in a non-work area in a case where predetermined confirmation operation or confirmation action by a worker is performed.

2. The traveling control method according to claim 1, wherein
in the non-work area, the work vehicle is caused to automatically travel only while the confirmation operation or the confirmation action by the worker is being performed.

3. The traveling control method according to claim 1, wherein
in a case where the work vehicle moves from the work area to the non-work area, a reception screen that receives the confirmation operation from the worker is displayed on an operation terminal.

4. The traveling control method according to claim 2, wherein
in a case where the work vehicle that is automatically traveling in the non-work area enters a predetermined state, the work vehicle is caused to automatically travel only while the confirmation operation or the confirmation action by the worker is being performed.

5. The traveling control method according to claim 4, wherein
the predetermined state is a state in which an obstacle that becomes an obstacle to automatic traveling based on a non-work route preset in the non-work area is detected, or a state in which specific work is required in the work vehicle.

6. The traveling control method according to claim 5, wherein
in a case where the obstacle is detected while the work vehicle is automatically traveling, the work vehicle is stopped temporarily, and then in a case where the obstacle is not detected before the confirmation operation or the confirmation action by the worker is performed, the automatic traveling based on the non-work route is resumed.

7. The traveling control method according to claim 2, wherein
in the non-work area, an automatic traveling permission area where the automatic traveling of the work vehicle is permitted is set,
a first work vehicle that enters the automatic traveling permission area is permitted to automatically travel regardless of whether or not there is the confirmation operation or the confirmation action by the worker, and
second and subsequent work vehicles that enter the automatic traveling permission area is permitted to automatically travel only while the confirmation operation or the confirmation action by the worker is being performed.

8. The traveling control method according to claim 2, wherein
in the non-work area, an automatic traveling permission area where the automatic traveling of the work vehicle is permitted is set,
in a case where a measure is taken to prohibit a vehicle, which is not related to work, from entering the automatic traveling permission area, the work vehicle in the automatic traveling permission area is permitted to automatically travel regardless of whether or not there is the confirmation operation or the confirmation action by the worker,
in a case where the measure is not taken in the automatic traveling permission area, the work vehicle in the automatic traveling permission area is permitted to automatically travel only while the confirmation operation or the confirmation action by the worker is being performed.

9. A traveling control program that controls traveling of a work vehicle capable of automatically traveling, the traveling control program for causing one or more processors to execute:
causing the work vehicle to automatically travel in a work area in a case where the work vehicle satisfies a traveling start condition; and
causing the work vehicle to automatically travel in a non-work area in a case where predetermined confirmation operation or confirmation action by a worker is performed.

10. A traveling control system that controls traveling of a work vehicle capable of automatically traveling, the traveling control method comprising:
causing the work vehicle to automatically travel in a work area in a case where the work vehicle satisfies a traveling start condition; and
causing the work vehicle to automatically travel in a non-work area in a case where predetermined confirmation operation or confirmation action by a worker is performed.
